# EUROPÄISCHE PATENTANMELDUNG

(11) **EP 2 868 183 A1**
(43) Veröffentlichungstag der Anmeldung: **06.05.2015**
(21) Anmeldenummer: 14401099.8
(22) Anmeldetag: 27.10.2014
(51) Int. Cl.: A01C 21/00, A01C 17/00

(54) **Verfahren zum Verteilen von Mineraldünger**

(30) Priorität: 30.10.2013 DE 102013111972
(71) Anmelder: Amazonen-Werke H. Dreyer GmbH & Co. KG, 49205 Hasbergen (DE)
(72) Erfinder: Kielhorn, Arnd, 49090 Osnabrück (DE); Rahe, Florian, 49504 Lotte (DE)

(57) **Zusammenfassung**

Verfahren (100) zur Verteilung von Dünger (6) auf einem Feld (F) mittels eines Schleuderdüngerstreuers (3) mit wenigstens einer Schleuderscheibe (4), wobei abhängig vom Abstand zu einer Feldgrenze (15) und/oder zu einem Vorgewende (13) eine Veränderung des Streufächers (7, 7a - d) erfolgt, dadurch gekennzeichnet, dass die Veränderung in Abhängigkeit von der maximalen Wurfweite (20a - c, 21 a - c, 22a - d) erfolgt.

## Beschreibung

Die Erfindung betrifft ein Verfahren zur Verteilung von Dünger auf einem Feld und eine landwirtschaftliche Maschine gemäß den Oberbegriffen der Ansprüche 1 bzw. 11.

Bei derartigen Verfahren wird das Feld mit dem Schleuderdüngerstreuer in parallelen Fahrgassen abgefahren, die zueinander in einem vorbestimmten Arbeitsabstand verlaufen. Hierbei ist der Schleuderdüngerstreuer beispielsweise am Heck eines Schleppers befestigt oder wird von diesem gezogen. Beim Erreichen des jeweiligen Endes einer Fahrgasse wendet der Schlepper mit dem Schleuderdüngerstreuer innerhalb des Vorgewendes in die benachbarte Fahrgasse hinein und setzt dort die Düngung fort.

Mittels des Schleuderdüngerstreuers wird dabei Dünger aus einem Vorratsbehälter mit einer Dosiereinheit auf wenigstens eine rotierende Schleuderscheibe aufgebracht und mit deren Schaufeln auf dem Feld verteilt. Der so erzeugte Streufächer verläuft hinter dem Schleuderdüngerstreuer und weist üblicherweise eine nierenförmige Streucharakteristik auf. Streucharakteristik des Streufächers bedeutet eine ortsaufgelöste Verteilung der Düngermenge auf dem Feld. Weiterhin kann unter anderem die Rotationsgeschwindigkeit der Schleuderscheibe verändert werden, um die Streucharakteristik zu optimieren oder den Schleuderdüngerstreuer auf eine bestimmte Arbeitsbreite anzupassen. Andere mögliche Maßnahmen, um dieses zu erreichen, sind u.a.: Veränderung der Länge oder Winkelanstellung der Wurfschaufeln, Verlagerung der Aufgabefläche des Düngers auf der Schleuderscheibe.

Üblicherweise wird bei derartigen Schleuderdüngerstreuern der Dünger bis hin zu den beiden benachbarten Fahrgassen, also über zwei Arbeitsbreiten hinweg verteilt. Dadurch wird ein Feldbereich zwischen zwei Fahrgassen von beiden Seiten her gedüngt, wodurch die Verteilung des Düngers besonders gleichmäßig ist.

Um darüber hinaus bei derartigen Verfahren eine möglichst gleichmäßige Verteilung des Düngers an einem Übergangsbereich vom inneren Feld zum Vorgewende zu erzielen, ist es beispielsweise durch die EP 2 319 285 B1 bekannt, die Dosiereinheiten bei der Fahrt aus dem Feld in das Vorgewende und bei der Fahrt vom Vorgewende in das Feld hinein basierend auf der Streucharakteristik des Streufächers automatisch aus- und einzuschalten. Dadurch wird verhindert, dass der Übergangsbereich über- oder unterdüngt wird.

Ein Nachteil bei bekannten Verfahren und landwirtschaftlichen Maschinen ist es, dass gelegentlich Dünger unbeabsichtigt über die Feldgrenzen hinaus- oder in das Vorgewende hineingeworfen wird. Dies ist ein wichtiges Thema, da es gesetzliche Vorgaben für das Arbeiten an Feldgrenzen gibt, die sehr streng sind, so dass fast nichts des zu verteilenden Düngers über die Feldgrenzen hinausgeworfen werden darf.

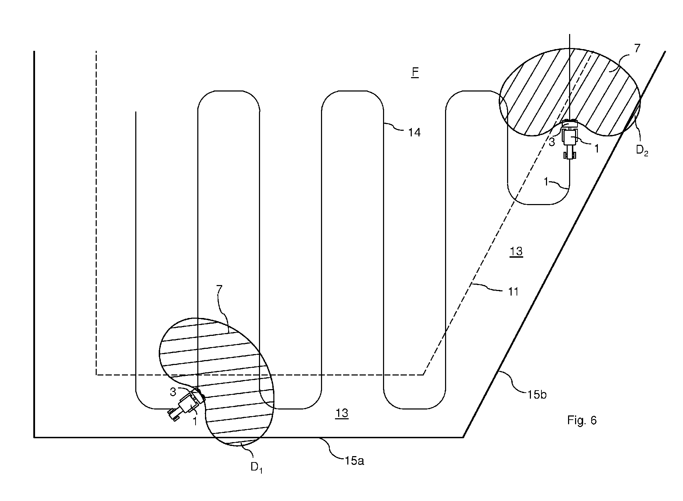

Ein Beispiel für den Stand der Technik ist in der Fig. 6 dargestellt. Zu sehen ist eine landwirtschaftliche Maschine 1 die ein Feld F entlang des Pfades 14 mit dem Schleuderdüngerstreuer 3 abfährt. Dabei weist der Streufächer 7 eine nierenförmige Streucharakteristik auf. Bei der Fahrt in das Vorgewende 13 hinein und aus diesem heraus wird die Düngung automatisch aus- und eingeschaltet und zwar basierend darauf, dass bei der gegebenen nierenförmigen Streucharakteristik weder eine Über- noch eine Unterdüngung des Übergangsbereichs 11 erfolgt. Dabei kann es vorkommen, dass Dünger beim Einfahren in das Vorgewende 13 unbeabsichtigt über die Feldgrenze 15a hinweg in den Bereich D₁ geworfen wird. Noch kritischer ist dies bei der Fahrt entlang einer schrägen Feldgrenze 15b, bei der bereits vor dem eigentlichen Wendemanöver Dünger über die Feldgrenze 15b hinweg in den Bereich D₂ geworfen wird.

Der Erfindung liegt daher die Aufgabe zugrunde, ein Verfahren zur Verteilung von Dünger und eine landwirtschaftliche Maschine mit einem Schleuderdüngerstreuer bereitzustellen, die eine unbeabsichtigte Verteilung des Düngers über Feldgrenzen hinweg oder in das Vorgewende hinein vermindert.

Diese Aufgabe wird bei einem Verfahren zur Verteilung von Dünger auf einem Feld gemäß dem Oberbegriff von Anspruch 1 mit den Merkmalen des kennzeichnenden Teils gelöst, gemäß dem die Veränderung des Streufächers in Abhängigkeit von der maximalen Wurfweite erfolgt.

Maximale Wurfweite kann hier bedeuten, dass dies ein Maß für die maximale Entfernung ab dem Schleuderdüngerstreuer ist, bis zu der hin der Dünger von der Schleuderscheibe geworfen wird. Die maximale Wurfweite kann eine äußere Begrenzungslinie und/oder wenigstens ein äußerer Begrenzungspunkt der Streucharakteristik des Streufächers sein.

Dadurch, dass die Veränderungen des Streufächers in Abhängigkeit von der maximalen Wurfweite und nicht allein basierend auf der Streucharakteristik des Streufächers erfolgt, kann bei einer Annäherung des Schleuderdüngerstreuers an die Feldgrenze und/oder das Vorgewende zuverlässig bestimmt werden, ob der Dünger unbeabsichtigt über die Feldgrenze hinaus oder in das Vorgewende hineingeworfen wird. Durch eine entsprechende Veränderung des Streufächers, wie beispielsweise eine Veränderung der Streucharakteristik oder ein Abschalten des Streufächers kann nun besonders einfach eine ungewollte Düngung außerhalb der Grenzen vermieden werden.

Ein Schlepper kann dafür vorgesehen sein, den Schleuderdüngerstreuer entlang von Feldgassen zu ziehen oder zu transportieren. Die Fahrtrichtung des Schleuderdüngerstreuers kann parallel zu einer Feldgasse oder einem Segment davon sein. Der Schleuderdüngerstreuer kann typischerweise eine oder zwei Schleuderscheiben umfassen. An dem Schleuderdüngerstreuer kann ein Vorratsbehälter angeordnet sein, aus dem der Dünger über Rohrleitungen und/oder eine Dosiereinheit auf die Schleuderscheibe aufgebracht wird. Auf der Schleuderscheibe können Schaufeln angeordnet sein, mittels derer über eine Rotationsbewegung der Schleuderscheibe der Dünger im Wesentlichen hinter dem Schleuderdüngerstreuer auf dem Feld verteilt wird. Der Streufächer kann eine kreisförmige, ellipsenförmige oder eine nierenförmige Streucharakteristik aufweisen. Die Streucharakteristik des Streufächers kann hier eine ortsaufgelöste Verteilung der Düngermenge auf dem Feld sein.

Die maximale Wurfweite kann eine Bearbeitungsbreite oder eine äußere Begrenzungslinie des Streufächers sein. Dadurch kann der Abstand der maximalen Wurfweite zur Feldgrenze und/oder zum Vorgewende besonders einfach ermittelt werden. Die Bearbeitungsbreite kann senkrecht zur Fahrtrichtung des Schleuderdüngerstreuers sein. Die äußere Begrenzungslinie des Streufächers kann ein richtungsabhängiger Abstand zu einem Zentrum des Schleuderdüngerstreuers sein, bis zu dem hin der Dünger mittels der Schleuderscheibe geworfen wird. Ebenso kann dies der radiale Abstand zum Zentrum des Schleuderdüngerstreuers sein, über den hinaus lediglich ein vernachlässigbarer Anteil des Düngers geworfen wird. Der vernachlässigbare Anteil des Düngers ist beim Grenzstreuen kleiner 5 %, vorzugsweise kleiner 1 % und weiterhin in besonders bevorzugter Weise 0,3 %. Beim Grabenstreuen ist sogar ein Sicherheitsabstand von zusätzlich 1,5 m einzuhalten. In den Graben und/oder das Gewässer darf sogar gar kein Dünger gelangen.

Die hier erwähnte Feldgrenze des zu bestreuenden Feldes muss nicht die Feldgrenze sein, sondern auch eine vom Landwirt festgelegte Linie mit einem von ihm festgelegten Abstand zur Feldgrenze, also eine sogenannte virtuelle Grenzlinie.

Die Begrenzungslinie des Streufächers kann wenigstens ein Teilsegment eines Kreises, Ovals oder einer Nierenform sein. Dadurch kann besonders einfach der Abstand der maximalen Wurfweite zur Feldgrenze und/oder zum Vorgewende bestimmt werden.

Die maximale Wurfweite kann in Abhängigkeit von Betriebsparametern der Schleuderscheibe und/oder des Düngertyps ermittelt werden. Da verschiedene Düngertypen unterschiedliche Rollreibcharakteristika und Flugeigenschaften aufweisen können, werden diese von der Schleuderscheibe unterschiedlich weit geworfen. Folglich kann bei der Berücksichtigung des Düngertyps die maximale Wurfweite besonders genau ermittelt werden. Darüber hinaus beeinflussen auch Betriebsparameter der Schleuderscheibe, wie beispielsweise deren Drehzahl und/oder Schaufeleinstellungen die maximale Wurfweite. Durch die Berücksichtigung derartiger Betriebsparameter kann ebenfalls die maximale Wurfweite besonders genau ermittelt werden.

Die maximale Wurfweite kann mittels eines Mess- und/oder Berechnungsverfahrens ermittelt werden. Bei dem Messverfahren kann der Dünger in zellen- oder linienartig angeordneten Trichtern aufgefangen werden und so die maximale Wurfweite besonders genau bestimmt werden. Das Messverfahren kann sowohl verschiedene Betriebsparameter als auch verschiedene Düngertypen berücksichtigen. Bei dem Berechnungsverfahren kann die maximale Wurfweite mittels einer Computersimulation bei bekannten physikalischen Eigenschaften des Düngers und des Schleuderdüngerstreuers ermittelt werden. Dadurch kann mit besonders geringem verfahrenstechnischen Aufwand die maximale Wurfweite ermittelt werden. Denkbar ist auch eine Kombination eines Mess- mit einem Berechnungsverfahren.

Die maximale Wurfweite kann als Datensatz in einer Steuerungseinheit abgelegt sein, die mit dem Schleuderdüngerstreuer verbunden ist. Dadurch kann der Bediener vor Ort besonders einfach die maximale Wurfweite als Datensatz abrufen (beispielsweise aus einer Datenbank) und damit den Schleuderdüngerstreuer für die Düngung einstellen. Die Steuerungseinheit kann an dem Schlepper oder an dem Schleuderdüngerstreuer angeordnet sein. Die Steuerungseinheit kann ein Bordcomputer sein, der einen Mikroprozessor, eine Anzeigeeinheit und einen Speicher umfasst.

Mittels eines Standortbestimmungssystems kann die Lage der maximalen Wurfweite gegenüber der Feldgrenze und/oder dem Vorgewende ermittelt werden. Durch das Standortbestimmungssystem kann die Lage der maximalen Wurfweite basierend auf aktuellen Positionsdaten besonders zuverlässig und genau ermittelt werden. Das Standortbestimmungssystem kann dazu ausgebildet sein, die Position und/oder die Orientierung des Schleppers oder des Schleuderdüngerstreuers gegenüber dem Feld zu ermitteln.

Das Standortbestimmungssystem kann satellitengestützt sein und optional einen GPS-Empfänger umfassen (GPS = Global Positioning System). Dadurch kann der Standort des Schleppers oder des Schleuderdüngerstreuers unabhängig von einer Infrastruktur am Feld bestimmt werden.

Die Lage der maximalen Wurfweite kann über die Position und die Orientierung der Schleuderscheibe gegenüber dem Standortbestimmungssystem bestimmt werden. Dadurch kann die Lage der maximalen Wurfweite gegenüber dem Feld bei einem größeren Abstand zwischen dem Standortbestimmungssystem und der Streuscheibe genau bestimmt werden. Darüber hinaus ist es dadurch auch möglich, die Lage der maximalen Wurfweite bei einem Gelenk zwischen dem Schleuderdüngerstreuer und dem Schlepper zu bestimmen. Dabei können Winkel- und/oder Positionssensoren zwischen dem Schleuderdüngerstreuer und dem Schlepper dafür vorgesehen sein, die aktuelle Anordnung des Schleuderdüngerstreuers gegenüber dem Schlepper zu ermitteln.

Das Standortbestimmungssystem kann die Lage der maximalen Wurfweite auf einer Landkarte des Feldes ermitteln und daraus den Abstand zu der Feldgrenze und/oder dem Vorgewende bestimmen, wobei die Landkarte Daten der Feldgrenze, einer Feldgasse und/oder des Vorgewendes umfasst. Mittels der Daten auf der Landkarte kann der Abstand des Streufächers zur Feldgrenze und/oder zum Vorgewende besonderes einfach bestimmt werden.

Des Weiteren stellt die Erfindung mit dem Anspruch 11 eine landwirtschaftliche Maschine bereit, mit einem Standortbestimmungssystem zur Bestimmung ihres Standorts auf dem Feld und mit einem Schleuderdüngerstreuer, der wenigstens eine Schleuderscheibe zur Verteilung von Dünger auf einem Feld mit einem veränderbaren Streufächer aufweist, dadurch gekennzeichnet, dass die landwirtschaftliche Maschine eine Steuereinheit umfasst, die zur Durchführung des Verfahrens nach wenigstens einem der Ansprüche 1 - 10 ausgebildet ist.

Dadurch ist es möglich, das zuvor beschriebene Verfahren gemäß einem der Ansprüche 1 - 10 mittels der Steuereinheit der landwirtschaftlichen Maschine auszuführen und den veränderbaren Streufächer automatisch so zu verändern, dass der Dünger nicht unbeabsichtigt über die Feldgrenze hinausgeworfen und/oder in das Vorgewende eingebracht wird. Dadurch ist es mittels der landwirtschaftlichen Maschine besonders einfach möglich, die gesetzlichen Vorgaben automatisch einzuhalten.

Die zuvor in Bezug auf das Verfahren beschriebenen Ausführungsformen oder Teile davon können mit dem Gegenstand des Anspruchs 11 kombiniert werden.

Weitere Merkmale und Vorteile der Erfindung werden nachfolgend anhand der in den Figuren dargestellten Ausführungsbeispiele erläutert. Dabei zeigt:
- Fig. 1: ein Ablaufdiagramm eines Verfahrens zur Verteilung von Dünger;
- Fig. 2: eine Darstellung einer landwirtschaftlichen Maschine zur Durchführung des Verfahrens aus der Fig. 1 in einer seitlichen Ansicht;
- Fig. 3: eine Darstellung einer landwirtschaftlichen Maschine bei der Durchführung des Verfahrens zur Verteilung von Dünger nach einer ersten Ausführungsform in einer Draufsicht;
- Fig. 4: eine Darstellung einer landwirtschaftlichen Maschine bei der Durchführung des Verfahrens zur Verteilung von Dünger nach einer zweiten Ausführungsform in einer Draufsicht;
- Fig. 5: eine Darstellung einer landwirtschaftlichen Maschine bei der Durchführung des Verfahrens zur Verteilung von Dünger nach einer dritten Ausführungsform in einer Draufsicht; und
- Fig. 6: eine Darstellung einer landwirtschaftlichen Maschine nach dem Stand der Technik in einer Draufsicht.

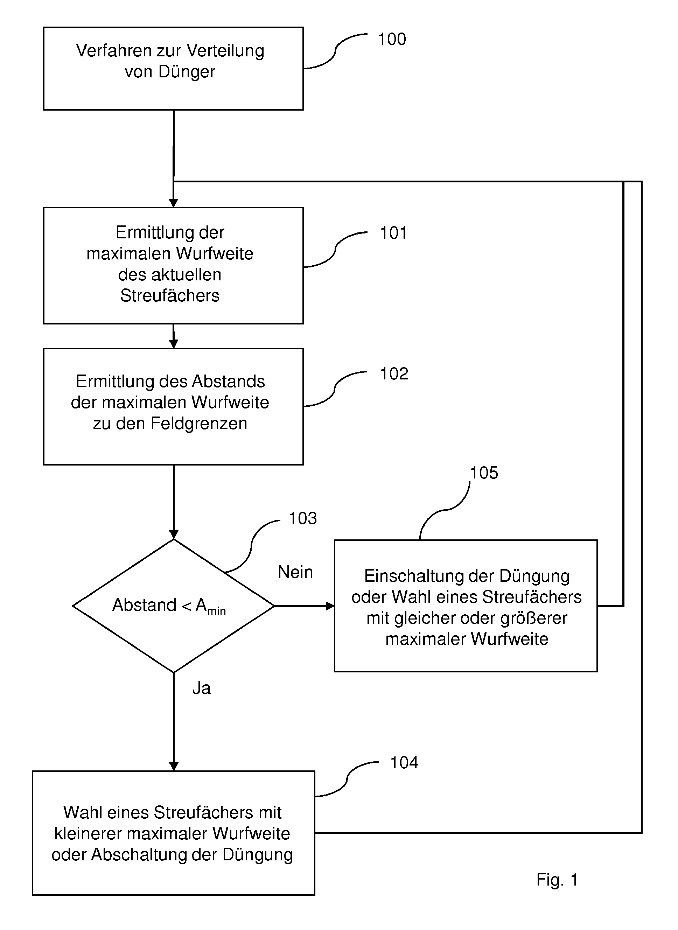

In der Fig. 1 ist ein Ablaufdiagramm des Verfahrens zur Verteilung von Dünger 100 dargestellt. Zu sehen ist, dass bei dem Verfahren 100 zunächst in einem ersten Schritt 101 die maximale Wurfweite des aktuellen Streufächers ermittelt und dann in einem zweiten Schritt 102 der Abstand der maximalen Wurfweite zu einer oder mehrerer Feldgrenzen bestimmt wird. Falls anschließend bei der Entscheidung 103 der Abstand geringer ist als ein minimaler Abstand Aₘᵢₙ, so wird in einem vierten Schritt 104 ein kleinerer Streufächer mit kleinerer maximaler Wurfweite gewählt. Falls jedoch der Abstand größer oder gleich Aₘᵢₙ ist, so wird in einem fünften Schritt 105 ein größerer Streufächer gewählt oder der Streufächer beibehalten. Das Verfahren 100 wird im Betrieb fortwährend in kurzen Zeitabständen von beispielsweise 0,1 s wiederholt.

Denkbar ist auch, dass andere Kriterien wie der minimale Abstand Aₘᵢₙ zu einer Veränderung des Streufächers herangezogen werden. Beispielsweise eine Annäherungsgeschwindigkeit der maximalen Wurfweite an die Feldgrenze oder ein Überschreiten der Feldgrenze.

Desweitern wird die Fahrgeschwindigkeit des Schleuderdüngerstreuers berücksichtigt. Hierbei kann aus der Fahrgeschwindigkeit und einer Flugzeit der Düngerkörner, die beispielsweise aus der maximalen Wurfweite bestimmt oder entsprechend hinterlegt wird, die zusätzliche Verschiebung des Streufächers in Fahrtrichtung berücksichtigt werden. Dies kann ein früheres Verändern des Streufächers notwendig machen. Die Fahrgeschwindigkeit kann eine zusätzliche Verschiebung des Streufächers von 3 m verursachen.

Beim hier dargestellten ersten Schritt 101 wird die maximale Wurfweite dadurch ermittelt, dass ein entsprechender Datensatz der maximalen Wurfweite anhand der aktuellen Betriebsparameter der Schleuderscheibe und des verwendeten Düngertyps in einer hier nicht dargestellten Steuereinheit abgerufen wird.

Um vorab die Datensätze in der Steuereinheit zu generieren, wird die maximale Wurfweite in einem gesonderten Verfahrensschritt mittels eines Messverfahrens bestimmt. Beispielsweise wird der gleiche Schleuderdüngerstreuer in einem Messlabor angeordnet und Dünger des gewünschten Typs auf dem Laborboden in einem Streufächer verstreut. Dort wird der Dünger mit wabenartig angeordneten Trichtern gesammelt, gewogen und daraus die Streucharakteristik des Streufächers ermittelt. Durch einen entsprechend gesetzten Schwellwert kann dann aus der Streucharakteristik des Schleuderdüngerstreuers ermittelt werden, wie weit der Dünger ab dem Zentrum des Schleuderdüngerstreuers in jede Richtung geworfen wurde. Dies entspricht dann der maximalen Wurfweite. Alternativ ist auch denkbar, dass die verschiedenen maximalen Wurfweiten für verschiedene Betriebsparameter und/oder Düngertypen mittels eines Berechnungsverfahrens ermittelt werden.

Durch Wiederholung des Mess- und/oder Berechnungsverfahrens kann die maximale Wurfweite für verschiedene Betriebsparameter der Schleuderscheibe bzw. für verschiedene Düngertypen ermittelt werden.

Die ermittelten maximalen Wurfweiten werden anschließend als Datensatz in einer Datenbank der Steuerungseinheit abgelegt und können so vor Ort jederzeit abgerufen werden.

Im zweiten Schritt 102 wird der Abstand der maximalen Wurfweite zu den Feldgrenzen bestimmt. Dabei werden in einem ersten Teilschritt der Ort und die Orientierung des Schleuderdüngerstreuers von einem satellitengestützten Standortbestimmungssystem abgefragt (GPS-System). Daraus kann nun die Position und die Orientierung der maximalen Wurfweite über eine geometrische Berechnung bestimmt und gegenüber einer Landkarte des Feldes ermittelt werden. Da die Landkarte auch die Feldgrenzen umfasst, kann nun durch eine weitere geometrische Berechnung in einem zweiten Teilschritt der Abstand zwischen der maximalen Wurfweite und der Feldgrenze berechnet werden.

Bei der Entscheidung 103 wird dann der Abstand mit dem Schellwert Aₘᵢₙ verglichen und entschieden, ob der Streufächer kleiner, gleich oder größer gewählt, ab- oder angeschaltet wird.

Das gleiche Verfahren ist auch für die Bestimmung der maximalen Wurfweite gegenüber einem Vorgewende denkbar.

Des Weiteren kann das Verfahren automatisch durch einen Bordcomputer bzw. die Steuerungseinheit durchgeführt werden, während der Bediener den Schlepper bzw. den Schleuderdüngerstreuer steuert.

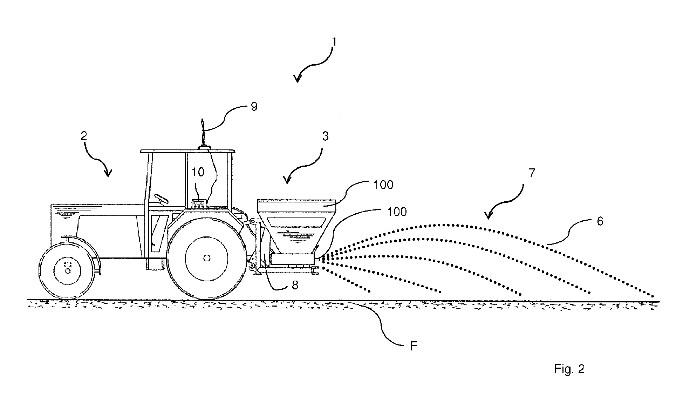

In der Fig. 2 ist eine landwirtschaftliche Maschine 1 zur Durchführung des Verfahrens 100 aus der Fig. 1 in einer Seitenansicht dargestellt. Zu sehen ist, dass am Heck des Schleppers 2 der Schleuderdüngerstreuer 3 angeordnet ist und dieser auf dem Feld F den Dünger 6 innerhalb des Streufächers 7 verteilt. Des Weiteren ist der Schleuderdüngerstreuer 3 über das Gestänge 8 fest mit dem Heck des Schleppers 2 verbunden. Denkbar ist auch, dass der Schleuderdüngerstreuer 3 über eine Gelenkverbindung mit dem Schlepper 2 gekoppelt ist und über eigene Abstützungsräder verfügt.

Zu sehen ist auch, dass der Schleuderdüngerstreuer 3 den Vorratsbehälter 5 umfasst, der einen Düngervorrat aufnimmt. Der Dünger 6 gelangt vom Vorratsbehälter 5 über eine hier nicht dargestellte Dosiereinheit auf die rotierende Schleuderscheibe 4 und wird mittels dort angeordneter Schaufeln innerhalb des Streufächers 7 auf dem Feld F verteilt.

Des Weiteren ist am Schlepper 2 die Steuerungseinheit 10 angeordnet, die hier als Bordcomputer ausgebildet ist. Sie umfasst eine Anzeige, eine Eingabeeinheit, einen Mikroprozessor und einen Speicher und ist über ein Kabel mit dem Standortbestimmungssystem 9 (GPS-Empfänger) verbunden. Bei bekanntem Abstand zwischen der Schleuderscheibe 4 und der Antenne des Standortbestimmungssystems 9 kann die genaue Position des Streufächers 7 gegenüber dem Feld F geometrisch berechnet werden. Daraus folgt dann unmittelbar die Lage der maximalen Wurfweite auf dem Feld F.

Ferner ist die Steuerungseinheit 10 mit dem Schleuderdüngerstreuer 3 verbunden und kann diesen an- und abschalten, sowie den Streufächer 7 verändern. Darüber hinaus ist die Steuerungseinheit 10 dazu ausgebildet, das zuvor in Bezug auf die Fig. 1 beschriebene Verfahren 100 durchzuführen.

Dadurch ist es möglich, die Veränderung des Streufächers 7 derart zu verändern, dass kein Dünger 6 unbeabsichtigt über eine Feldgrenze hinweg- oder in das Vorgewende hineingeworfen wird.

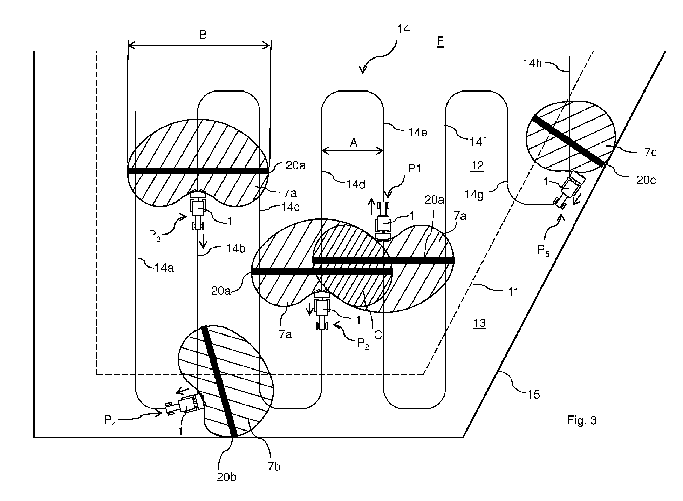

In der Fig. 3 ist eine landwirtschaftliche Maschine 1 an verschiedenen Positionen P₁-P₅auf dem Feld F bei der Durchführung des Verfahrens 100 zur Verteilung von Dünger 6 nach einer ersten Ausführungsform in einer Draufsicht gezeigt. Zu sehen ist das Feld F mit der Feldgrenze 15, bis zu der hin die Düngung gesetzlich erlaubt ist. Dabei fährt die landwirtschaftliche Maschine 1 das Feld 1 entlang des Pfades 14 mit den parallelen Fahrgassen 14a - h ab. Im Bereich des Vorgewendes 13 wendet die landwirtschaftliche Maschine 1 und fährt dann zu einer der nächstliegenden Fahrgasse 14a - h.

Innerhalb des inneren Feldes 12 sind die Fahrgassen 14a - 14h mit dem Arbeitsabstand A parallel zueinander angeordnet. Zu sehen ist, dass dort entsprechend der Position P₃ die landwirtschaftliche Maschine 1 den Streufächer 7a aufweist, der eine Bearbeitungsbreite B aufweist, die deutlich größer ist als die Arbeitsbreite A. In diesem Beispiel ist die Bearbeitungsbreite B etwa zweimal so groß wie die Arbeitsbreite A, wobei der Dünger beim Fahren entlang der Fahrgasse 14b bis hin zu den benachbarten Fahrgassen 14a, 14c geworfen. Ferner ist bei der Position P₃ auch zu sehen, dass die maximale Wurfweite 20a der Bearbeitungsbreite B entspricht und als gerader Balken quer zur Fahrtrichtung modelliert ist.

Des Weiteren ist an den Positionen P₁ und P₂ zu sehen, dass das Feld F durch die Überlappung der beiden Streufächer 7a im Bereich C von beiden Fahrgassen 14d, 14e her mit Dünger bestreut wird. Hierdurch wird eine besonders homogene Düngerverteilung auf dem Feld erzielt.

An der Position P₄ ist zu sehen, dass der Streufächer 7b verkleinert wurde und eine entsprechend kleinere maximale Wurfweite 20b aufweist. Dabei berührt gerade das linke Ende der maximalen Wurfweite 20b die Feldgrenze 15. Fährt nun die landwirtschaftliche Maschine 1 entlang des dargestellten Pfades 14 weiter, so würde bei dem hier gewählten Streufächer 7b der Dünger über die Feldgrenze 15 hinausgeworfen werden. Da mittels des zuvor beschriebenen Verfahrens 100 der Abstand der maximalen Wurfweite 20b zur Feldgrenze 15 fortlaufend ermittelt wird, kann die landwirtschaftliche Maschine 1 auf einen noch kleineren Streufächer umschalten und ein Überwerfen der Feldgrenze 15 wird automatisch verhindert.

Weiterhin ist in der Fig. 3 zu sehen, dass an der Position P₅ an einer schrägen Feldgrenze ein noch kleinerer Streufächer 7c mit einer entsprechend kleineren maximalen Wurfweite 20c gewählt wurde. Fährt nun die landwirtschaftliche Maschine 1 entsprechend dem eingezeichneten Pfad weiter, so würde der Dünger bei gleichbleibendem Streufächer 7c über die Feldgrenze 15 hinausgeworfen werden. Um dies zu verhindern, wird nun durch das Verfahren 100 die Düngung automatisch abgeschaltet. Die Düngung wird anschließend erst dann wieder eingeschaltet, wenn die landwirtschaftliche Maschine 1 so weit innerhalb der Feldgrenze 15 fährt, dass der kleinste wählbare Streufächer keinen Dünger darüber hinauswirft.

In dem zuvor in Bezug auf die Fig. 1 beschriebenen Schritten 101 und 102 wird die Position der maximalen Wurfweiten 20a - 20c gegenüber der Feldgrenze 15 fortlaufend ermittelt. Erfolgt nun eine Annäherung an die Feldgrenze 15, so wird automatisch ein entsprechend kleinerer Streufächer 7b, 7c gewählt oder die Düngung unterbrochen. Umgekehrt wird bei einer Entfernung der maximalen Wurfweite 20a - 20c von der Feldgrenze 15 automatisch die Düngung wieder angeschaltet bzw. ein entsprechend größerer Streufächer 7a gewählt.

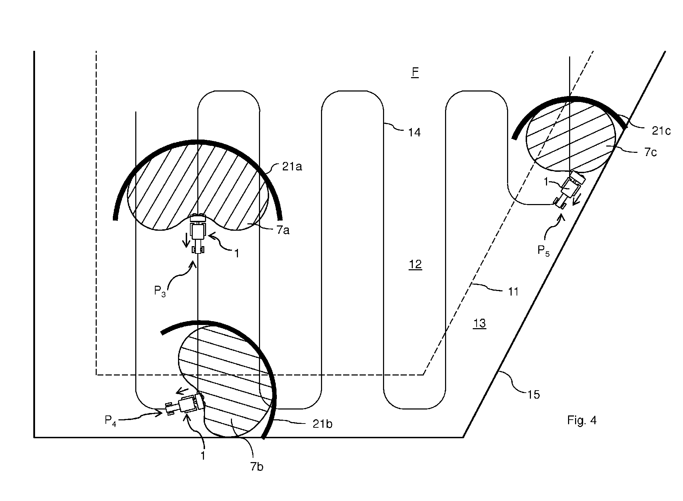

In der Fig. 4 ist eine Darstellung einer landwirtschaftlichen Maschine 1 bei der Durchführung des Verfahrens 100 zur Verteilung von Dünger 6 nach einer zweiten Ausführungsform gezeigt. Diese unterscheidet sich von der ersten in der Fig. 3 dargestellten ersten Ausführungsform lediglich dadurch, dass die maximale Wurfweite 21a - 21 c ein Teilsegment eines Kreises ist. Dadurch wird die tatsächliche äußere Form des Streufächers 7a - 7c noch genauer angenähert, als dies bei den balkenartig ausgebildeten maximalen Wurfweiten 20a - 20c der ersten Ausführungsform der Fall ist.

Zu sehen ist, dass an der Position P₃ die maximale Wurfweite 21 a nicht über die Feldgrenze 15 hinausragt. Erst kurz vor dem Erreichen der Position P₄ berührt die maximale Wurfweite 21 a des Streufächers 7a die Feldgrenze 15. Folglich wurde bereits vor Erreichen der Position P₄ auf den kleineren Streufächer 7b mit einer kleineren maximalen Wurfweite 21 b umgeschaltet.

Bei der Position P₅ am schrägen Teil der Feldgrenze 15 ist ebenso zu sehen, dass der Streufächer 7c eine noch kleinere Form aufweist als der Streufächer 7b. Folglich ist dem Streufächer 7c eine noch kleinere maximale Wurfweite 21 c zugeordnet.

Durch die Modellierung der maximalen Wurfweiten 21a - 21 c als Teilkreissegmente ist es noch genauer möglich, ein Überwerfen der Feldgrenze 15 mit Dünger zu verhindern.

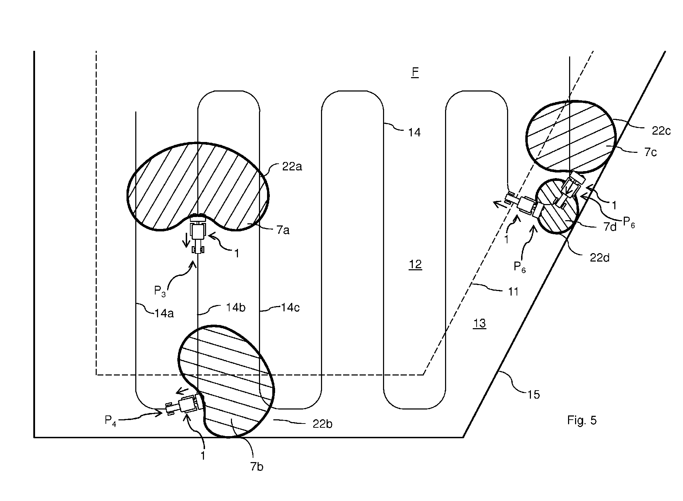

In Fig. 5 ist eine Darstellung einer landwirtschaftlichen Maschine 1 bei der Durchführung des Verfahrens 100 zur Verteilung von Dünger auf dem Feld F nach einem dritten Ausführungsbeispiel in einer Draufsicht dargestellt. Diese unterscheidet sich lediglich von der ersten und zweiten in den Fig. 3 bzw. 4 dargestellten Ausführungsformen dadurch, dass die maximalen Wurfweiten 22a - 22d äußere Begrenzungslinien der Streufächer 7a - 7d sind. Dadurch ist eine sehr exakte Bestimmung der maximalen Wurfweiten 22a - 22d gegenüber der Feldgrenze 15 möglich.

Zu sehen ist, dass an der Position P₃ weit innerhalb des Feldes F der Streufächer 7a und damit die maximale Wurfweite 22a bis hin zu den benachbarten Fahrgassen 14a, 14c reicht. Fährt nun die landwirtschaftliche Maschine 1 weiter entlang der Fahrgasse 14b, so berührt beim Wendemanöver die maximale Wurfweite 22a die Feldgrenze 15 und es wird nun gemäß dem Verfahren 100 automatisch auf den nächst kleineren Streufächer 7b mit der maximalen Wurfweite 22b umgeschaltet. Im weitern Verlauf berührt dann an der Position P₄ die maximale Wurfweite 22b gerade die äußere Feldgrenze 15 und es wird weiter auf einen nächst kleineren Streufächer umgeschaltet bzw. die Düngung wird vollständig unterbrochen.

Wie bei der Position P₅ und P₆ zu sehen ist, kann beim Wendemanöver an einer schrägen Feldgrenze 15 durch die Modellierung der maximalen Wurfweite 22c, 22d als äußere Begrenzungslinie sehr genau ermittelt werden, ob die Streufächer 7c, 7d Dünger über die Feldgrenze 15 hinauswerfen. Dadurch ist es mit höchstmöglicher Genauigkeit möglich, dass die Düngung nur nahe der gewünschten Feldgrenze 15 bzw. des Vorgewendes 13 erfolgt.

Es sei nochmals darauf hingewiesen, dass hier die erwähnte Feldgrenze, die von den Düngerkörner nicht überschritten werden darf, des zu bestreuenden Feldes nicht die eigentliche Feldgrenze sein muss, sondern auch eine vom Landwirt festgelegte Linie mit einem von ihm festgelegten Abstand zur Feldgrenze, also eine sogenannte virtuelle Grenzlinie sein kann. Diese virtuelle Grenzlinie ist in das Bordcomputersystem einzugeben.

Es versteht sich, dass die in den zuvor beschriebenen Ausführungsbeispielen genannten Merkmale nicht auf diese speziellen Kombinationen beschränkt sind und auch in beliebigen anderen Kombinationen möglich sind.

## Patentansprüche

1. Verfahren (100) zur Verteilung von Dünger (6) auf einem Feld (F) mittels eines Schleuderdüngerstreuers (3) mit wenigstens einer Schleuderscheibe (4), wobei abhängig vom Abstand zu einer Feldgrenze (15) und/oder zu einem Vorgewende (13) eine Veränderung des Streufächers (7, 7a - d) erfolgt, **dadurch gekennzeichnet, dass** die Veränderung in Abhängigkeit von der maximalen Wurfweite (20a - c, 21 a - c, 22a - d) erfolgt.

2. Verfahren (100) nach Anspruch 1, wobei die maximale Wurfweite eine Bearbeitungsbreite (20a - c) oder eine äußere Begrenzungslinie (21a - c, 22a - d) des Streufächers (7a - d) ist.

3. Verfahren (100) nach Anspruch 2, wobei die Begrenzungslinie (21a - c, 22a - d) des Streufächers (7a - d) wenigstens ein Teilsegment eines Kreises, Ovals oder einer Nierenform ist.

4. Verfahren (100) nach wenigstens einem der Ansprüche 1 - 3, wobei die maximale Wurfweite (20a - c, 21a - c, 22a - d) in Abhängigkeit von Betriebsparametern der Schleuderscheibe (4) und/oder des Düngertyps ermittelt wird.

5. Verfahren (100) nach wenigstens einem der Ansprüche 1 - 4, wobei die maximale Wurfweite (20a - c, 21a - c, 22a - d) mittels eines Mess- und/oder Berechnungsverfahrens ermittelt wird.

6. Verfahren (100) nach wenigstens einem der Ansprüche 1 - 5, wobei die maximale Wurfweite (20a - c, 21a - c, 22a - d) als Datensatz in einer Steuerungseinheit (10) abgelegt ist, die mit dem Schleuderdüngerstreuer (3) verbunden ist.

7. Verfahren (100) nach wenigstens einem der Ansprüche 1 - 6, wobei mittels eines Standortbestimmungssystems (9) die Lage der maximalen Wurfweite (20a - c, 21 a - c, 22a - d) gegenüber der Feldgrenze (15) und/oder dem Vorgewende (13) ermittelt wird.

8. Verfahren (100) nach Anspruch 7, wobei das Standortbestimmungssystem (9) satellitengestützt ist und optional einen GPS-Empfänger umfasst.

9. Verfahren (100) nach Anspruch 7 oder 8, wobei die Lage der maximalen Wurfweite (20a - c, 21a - c, 22a - d) über die Position und die Orientierung der Schleuderscheibe (4) gegenüber dem Standortbestimmungssystem (9) bestimmt wird.

10. Verfahren (100) nach wenigstens einem der Ansprüche 7 - 9, wobei das Standortbestimmungssystem (9) die Lage der maximalen Wurfweite (20a - c, 21a - c, 22a - d) auf einer Landkarte des Feldes (F) ermittelt und daraus den Abstand zu der Feldgrenze (15) und/oder dem Vorgewende (13) bestimmt, wobei die Landkarte Daten der Feldgrenze (15), einer Feldgasse (14) und/oder des Vorgewendes (13) umfasst.

11. Landwirtschaftliche Maschine (1) mit einem Standortbestimmungssystem (9) zur Bestimmung ihres Standorts auf dem Feld (F) und mit einem Schleuderdüngerstreuer (3), der wenigstens eine Schleuderscheibe (4) zur Verteilung von Dünger (6) auf einem Feld (F) mit einem veränderbaren Streufächer (7, 7a - 7d) aufweist, **dadurch gekennzeichnet, dass** die landwirtschaftliche Maschine (1) eine Steuereinheit (10) umfasst, die zur Durchführung des Verfahrens (100) nach wenigstens einem der Ansprüche 1 - 10 ausgebildet ist.
